(19) Europäisches Patentamt / European Patent Office / Office européen des brevets

(11) **EP 4 130 313 A1**

(12) **EUROPEAN PATENT APPLICATION**
published in accordance with Art. 153(4) EPC

(43) Date of publication:
**08.02.2023 Bulletin 2023/06**

(21) Application number: **21776397.8**

(22) Date of filing: **22.01.2021**

(51) International Patent Classification (IPC):
**C22C 18/00** (1974.07)     **C25D 1/04** (1974.07)
**H01M 4/42** (1974.07)

(52) Cooperative Patent Classification (CPC):
**C22C 18/00; C25D 1/04; H01M 4/42; Y02E 60/10**

(86) International application number:
**PCT/JP2021/002119**

(87) International publication number:
**WO 2021/192563 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020  JP 2020059067**

(71) Applicant: **Mitsui Mining & Smelting Co., Ltd.
Shinagawa-ku
Tokyo 141-8584 (JP)**

(72) Inventors:
• **SAWAMOTO, Hiroki
Tokyo 141-8584 (JP)**
• **INOUE, Hidetoshi
Takehara-shi, Hiroshima 725-0025 (JP)**
• **MATSUFUJI, Masatsugu
Takehara-shi, Hiroshima 725-0025 (JP)**
• **KABASHIMA, Takamasa
Takehara-shi, Hiroshima 725-0025 (JP)**

(74) Representative: **Novagraaf Technologies
Bâtiment O2
2, rue Sarah Bernhardt
CS90017
92665 Asnières-sur-Seine Cedex (FR)**

(54) **ZINC FOIL, BATTERY NEGATIVE ELECTRODE ACTIVE MATERIAL USING SAME, AND ZINC FOIL PRODUCTION METHOD**

(57)     A zinc foil has a zinc crystal grain size of 0.2 $\mu$m or more and 50 $\mu$m or less. The zinc foil preferably includes: a base metal containing zinc; and a metal element other than zinc. The metal element preferably includes at least one selected from the group consisting of bismuth, indium, magnesium, calcium, gallium, tin, barium, strontium, silver, and manganese. It is also preferable that the content of the metal element is 10 ppm or more and 10000 ppm or less in terms of mass. It is also preferable that the zinc foil has an apparent density of 3 g/cm$^3$ or more and 7 g/cm$^3$ or less. The apparent density is based on contour measurement.

**EP 4 130 313 A1**

## Description

### Technical Field

The present invention relates to a zinc foil. The present invention also relates to a negative electrode active material for batteries including the zinc foil, and a zinc foil production method.

### Background Art

Conventionally, in batteries that contain zinc as the negative electrode active material, lead and cadmium have been added to zinc for the purpose of both suppressing gas generation during long term storage and achieving a high discharge performance. However, with an increase of environmental consciousness, the use of lead and cadmium is increasingly avoided, and the use of bismuth instead of these elements is proposed. For example, Patent Literature 1 discloses a manganese battery that includes a negative electrode zinc can obtained by rolling a zinc alloy formed by adding 1000 ppm or more of bismuth to a zinc ingot.

Patent Literature 2 discloses a method for producing a negative electrode zinc material for manganese dry batteries. According to this production method, an alloy containing zinc and bismuth prepared in a blast furnace is shaped into a strip using a casting machine, and then rolled to a predetermined thickness.

Citation List

### Patent Literatures

Patent Literature 1: JP 2000-058045A
Patent Literature 2: US 2008/029189A1

### Summary of Invention

With the use of a negative electrode material obtained by adding bismuth to zinc, it is possible to suppress gas generation to a certain extent, but a satisfactory level has not yet been reached. In particular, in the case where the negative electrode material is produced through rolling as disclosed in Patent Literatures 1 and 2, zinc crystal grains are likely to grow, which may promote gas generation.

Accordingly, it is an object of the present invention to provide a zinc negative electrode active material, with which it is possible to overcome various problems encountered with the conventional technique described above.

The present invention provides a zinc foil, with a zinc crystal grain size of 0.2 $\mu$m or more and 50 $\mu$m or less.

The present invention also provides a negative electrode active material for batteries including a zinc foil with a zinc crystal grain size of 0.2 $\mu$m or more and 50 $\mu$m or less.

Furthermore, the present invention provides a zinc foil production method including: reducing and depositing zinc on a cathode that is immersed in an electrolyte solution that contains a zinc source, wherein the reduction is performed while circulating the electrolyte solution at a circulation rate of 0.001 L / (min • mm$^2$) or more and 1 L / (min • mm$^2$) or less, and a current density during the reduction is set to 1000 A/m$^2$ or more and 10000 A/m$^2$ or less.

### Brief Description of Drawings

[Fig. 1] Fig. 1 is a schematic diagram showing an area between electrodes that is used to calculate electrolyte solution circulation rate.

[Fig. 2] Fig. 2 is an image captured using software that is used to determine zinc crystal grain size.

[Fig. 3] Fig. 3(a) is a scanning electron microscopy image of a zinc foil obtained in Example 3 taken along a cross section of the zinc foil in the thickness direction (inclined at 70°), and Fig. 3(b) is an image of zinc crystal grains observed with an electron backscatter diffraction evaluation apparatus.

[Fig. 4] Fig. 4 is a graph showing a result obtained by analyzing the zinc foil obtained in Example 3 for zinc crystal grain size using analysis software.

Description of Embodiment

Hereinafter, the present invention will be described based on an embodiment thereof. A zinc foil according to the present invention contains a base metal including zinc. As used herein, the expression "to contain a base metal including zinc" means that a content of the elemental zinc in the zinc foil is preferably 80 mass% or more. The content of elemental zinc can be measured using ICP emission spectroscopic analysis.

A feature of the zinc foil according to the present invention is that the zinc crystal grains contained in the zinc foil are smaller in size as compared with those contained in conventionally known zinc foils. With this feature, gas generation during storage of the batteries can be suppressed as compared with the case where a conventional zinc foil is used. Although the reason is still not completely clear, the inventors of the present application believe that the reason may be that small zinc crystal grains are distributed and a large number of grain boundaries are present, which causes variation in hydrogen overvoltage. From the viewpoint of more significantly exhibiting this advantageous effect, the zinc crystal grain size is preferably 0.2 $\mu$m or more and 50 $\mu$m or less, more preferably 0.5 $\mu$m or more and 50 $\mu$m or less, and even more preferably 1 $\mu$m or more and 30 $\mu$m or less, and yet even more preferably 2 $\mu$m or more and 26 $\mu$m or less. A description of a preferable method for forming crystal grains with a size within the above-described range in the zinc foil will be given later. It is to be noted that the crystal grain size is a concept different from the crystallite size determined from XRD patterns.

The size of zinc crystal grains in the zinc foil according to the present invention is measured using a method described below. For the measurement, an FE gun scanning electron microscope (SUPRA 55VP available from Carl Zeiss AG) equipped with an electron backscatter diffraction (hereinafter also referred to as "EBSD") evaluation apparatus (OIM Data Collection Ver. 7.2.0 available from TSL solutions), and an attached EBSD analysis apparatus are used. A sample with a cut cross section is prepared using an ultramicrotome, and data regarding crystal grain size in the cross section, on which the thickness of sample as a whole can be measured, is obtained for this sample in accordance with an EBSD method.

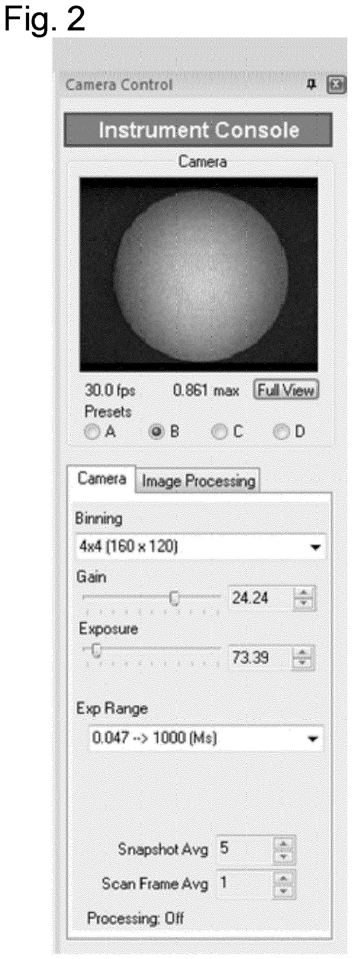

Background processing of EBSD measurement data is performed by, in the above-mentioned EBSD evaluation apparatus, unchecking the checkboxes Background Subtraction, Normalize Intensity Histogram, and Dynamic Background Subtraction under the Image Processing tab, and setting Binning to 4 × 4 (160 × 120). Gain and Exposure may be changed as appropriate such that, in an image shown in the Camera window, as shown in Fig. 2, a Kikuchi pattern is not observed with electron diffraction and 30 ± 1 fps is satisfied. Under this condition, the value of Ave under the Image Processing Function tab is set to 10, and background information is acquired with Capture Bkd.

The value of WD when measuring the crystal grain size is set to 15 ± 1 mm, and the checkboxes Background Subtraction, Normalize Intensity Histogram, and Dynamic Background Subtraction under the Image Processing tab are checked. In an observation area, Zn is selected from Phase under Capture Pattern in the EBSD evaluation apparatus, and the value of WD is adjusted under the condition in which the value of Fit under Solutions is 1.5 or less and the value of CI is greater than 0.1.

The crystal grain size is measured by subjecting the cross-sectional image of the sample obtained with Capture SEM under Scan to Start Scan.

From the measurement data, the crystal grain size (average) (Grain Size (Average)) is determined using All data in Grain Size Quick Chart under the analysis menu in an EBSD analysis program (OIM Analysis Ver. 7.3.1 available from TSL solutions). The obtained crystal grain size (average) is defined as "zinc crystal grain size" in the present invention. In this measurement, a grain boundary with a misorientation of 15° or more is determined as a crystal grain boundary. However, the crystal structure of zinc is hexagonal closest packing structure, and, for this reason, taking twin grain boundaries into consideration, the misorientation of a grain boundary is represented using the rotation axis and the angle of rotation, and if the following cases are satisfied, the grain boundary is determined as not being a crystal grain boundary: the case where the rotation axis is represented by (1) shown below, and the angle of rotation is 94.8 ± 1° and 57 ± 1°; and the case where the rotation axis is represented by (2) shown below, and the angle of rotation is 34.8 ± 1° and 64.3 ± 1°. The observation conditions of the scanning electron microscope are set as follows: an acceleration voltage of 20 kV, an aperture diameter of 60 $\mu$m, High Current Mode, and a sample angle of 70°. The observation magnification, the measurement area, and the stepsize may be changed as appropriate according to the crystal grain size.

[Math. 1]

$$(1) \quad <1\ \bar{2}\ \bar{1}\ 0>$$

$$(2) \quad <\bar{1}\ 1\ 0\ 0>$$

As described above, the zinc foil according to the present invention contains zinc as a base metal, and may contain a metal element other than zinc. With this configuration, gas generation during storage of the battery can be effectively suppressed. From this viewpoint, it is advantageous to use, as the metal element other than zinc, a metal element with a hydrogen overvoltage higher than that of zinc or an oxidation-reduction potential nobler than that of zinc. Such a metal element may include at least one selected from the group consisting of bismuth, indium, magnesium, calcium, gallium, tin, barium, strontium, silver, and manganese. Among these metal elements, it is preferable to use at least one selected from the group consisting of bismuth, indium, tin, silver, and gallium from the viewpoint of further suppressing gas generation, and it is more preferable to use at least one selected from the group consisting of bismuth, indium, tin, and silver from the viewpoint of even further suppressing gas generation.

From the viewpoint of effectively suppressing gas generation during storage of the battery, the content of the metal element in the zinc foil when represented by the total amount of the metal element in the zinc foil is preferably 10 ppm or more and 10000 ppm or less in terms of mass, more preferably 15 ppm or more and 8000 ppm or less in terms of mass, even more preferably 20 ppm or more and 7000 ppm or less in terms of mass, yet even more preferably 30 ppm or more and 6500 ppm or less in terms of mass, and yet even more preferably 40 ppm or more and 6000 ppm or less in terms of mass. The content of the metal element in the zinc foil can be measured using an ICP emission spectroscopic analysis method. For the measurement using an ICP emission spectroscopic analysis method, a method that conforms to JIS H1111 can be used. Specifically, the zinc foil is dissolved in an acid solution such as hydrochloric acid. After that, the concentrations of metal elements other than zinc contained in the zinc foil are measured using an ICP emission spectroscopic analysis method, and the content of each metal element is converted into mass, with the total metal solution concentration being set to 1.

Although the presence state of the metal element in the zinc foil is not clearly known, the metal element is not at least in a state of forming a solid solution with zinc. The state of forming a solid solution with zinc refers to a state in which the crystal structure of zinc varies by addition of the metal element. When element mapping is performed on a cross section of the zinc foil that contains the metal element based on an energy dispersive X-ray spectroscopy method (characteristic X-ray detection method) using a scanning electron microscope, a mapping image that shows the presence state of zinc and a mapping image that shows the presence state of the metal element can be obtained.

In the zinc foil, it is preferable that the presence state of the metal element is as uniform as possible. With this configuration, gas generation during storage of the battery can be further suppressed as compared with the case where a conventional metal element-containing zinc foil is used. In order to achieve the presence state of the metal element, it is advantageous to reduce the size of zinc crystal grains in the zinc foil to be within the above-described range. Particularly when the metal element is not compatible with zinc, for this reason, the metal element is likely to segregate in the vicinity of the grain boundaries of zinc crystal grains. In this case, if the zinc crystal grains are large in size, the metal element is present non-uniformly when macroscopically observed to such a degree that the presence of grain boundaries can be confirmed. Conversely, when the zinc crystal grains are small in size, the metal element is present uniformly when macroscopically observed to such a degree that the presence of grain boundaries can be confirmed. For the reason described above, it is advantageous to reduce the size of zinc crystal grains in the zinc foil to be small.

Conventionally, a metal element-containing zinc foil has been produced by rolling a metal element-containing zinc casting. When metal element-containing zinc is produced through casting, zinc crystal grains grow due to cooling condition, and thus it has not been easy to produce small crystal grains. As a result, the metal element is deposited in the vicinity of grain boundaries of large zinc crystal grains, resulting in non-uniform presence of the metal element when observed by enlarging to such a degree that the presence of grain boundaries can be confirmed. In contrast, in the present invention, the zinc foil is preferably produced using an electrolysis method, which will be described later. As a result, it has been made possible to easily produce small zinc crystal grains and make the presence state of the metal element as uniform as possible for the first time.

The presence state of the metal element in the zinc foil according to the present invention can be determined based on a mapping image of the metal element based on an energy dispersive X-ray spectroscopy method (hereinafter also referred to as "EDS") using a scanning electron microscope (hereinafter also referred to as "SEM"). Specifically, an imaginary grid with a plurality of squares, each square having a side length of 300 nm, is set on the mapping image, and when it is possible to observe the metal element in preferably 2 % by number or more, more preferably 5 % by number or more, and even more preferably 10 % by number or more relative to the total number of the plurality of squares, it is determined that the presence state of the metal element is uniform. The number of squares is set to 48 or more.

In particular, the metal element is preferably bismuth because when the zinc foil contains bismuth, gas generation during storage of the battery can be more effectively suppressed. In order to further suppress gas generation during storage of the battery, a content of bismuth in the zinc foil is preferably 10 ppm or more and 10000 ppm or less in terms of mass, more preferably 15 ppm or more and 8000 ppm or less in terms of mass, even more preferably 20 ppm or more and 6000 ppm or less in terms of mass, yet even more preferably 30 ppm or more and 3000 ppm or less in terms of mass, and yet even more preferably 40 ppm or more and 1200 ppm or less in terms of mass.

The zinc foil according to the present invention desirably contains no aluminum from the viewpoint of reducing negative effects such as passivation in a primary battery or a secondary battery, and desirably contains no lead from the viewpoint of reducing environmental burden. Even if the zinc foil according to the present invention contains one or both of these elements, the content thereof is desirably as low as possible. Specifically, a content of aluminum is preferably 0.04 mass% or less, more preferably 0.03 mass% or less, and even more preferably 0.02 mass% or less. A content of lead is preferably 60 ppm or less, more preferably 50 ppm or less, and even more preferably 40 ppm or less in terms of mass. The content of aluminum and the content of lead in the zinc foil according to the present invention are measured using an ICP emission spectroscopic analysis method. Also, it is desirable that the zinc foil according to the present invention contains no cadmium, or a content of cadmium is as low as possible even if the zinc foil contains cadmium. In particular, the content of cadmium is desirably 10 ppm or less in terms of mass.

Another feature of the zinc foil according to the present invention is that the zinc foil has an apparent density lower than that of conventionally known zinc foils such as, for example, zinc foils produced using a rolling method as disclosed in Patent Literatures 1 and 2. With this feature as well, gas generation during storage of the battery can be suppressed as compared with the case where a conventional zinc foil is used.

Specifically, the apparent density of the zinc foil takes a value of, preferably 3 g/cm$^3$ or more and 7 g/cm$^3$ or less, more preferably 4 g/cm$^3$ or more and 7 g/cm$^3$ or less, and even more preferably 5 g/cm$^3$ or more and 7 g/cm$^3$ or less. By setting the apparent density of the zinc foil within the above-described range, gas generation during storage of the battery can be effectively suppressed. A description of a preferable method for producing a zinc foil with an apparent density within the above-described range will be given later.

As used herein, the term "apparent density" refers to a value calculated from the volume of the zinc foil determined through contour measurement and the mass of the zinc foil. A method for determining the volume of the zinc foil through contour measurement will be described below. The area of the zinc foil in a plan view is calculated from the length and the width of the zinc foil. The thickness of the zinc foil is measured using a micrometer. The arithmetic mean of values measured at 15 locations is defined as thickness. The mass of the sample whose volume has been determined from the area and the thickness is measured, and apparent density is calculated from the volume and the mass. The apparent density thus calculated may also be referred to as "apparent density through contour measurement". It is considered that a density other than apparent density also affects gas generation. As a method for measuring the density other than apparent density, for example, an Archimedean method or a measurement method that conforms to JISZ 8807: 2012 may be used. Other examples of the method for measuring the density other than apparent density include: a method for measuring density and specific gravity using a pycnometer; a method for measuring density and specific gravity using a le chatelier pycnometer; a method for measuring density and specific gravity using a hydrometry method; a method for measuring density and specific gravity using an acoustic method; and a method for measuring density and specific gravity using a gas substitution method.

In connection with the apparent density of the zinc foil described above, the zinc foil according to the present invention is a thin zinc foil with a thickness of, preferably 10 μm or more and 500 μm or less, more preferably 15 μm or more and 400 μm or less, and even more preferably 20 μm or more and 300 μm or less. The thickness of the zinc foil is measured using the above-described method. Such a thin zinc foil is suitable particularly as a negative electrode material for thin primary batteries and secondary batteries. As will be described later, particularly when the zinc crystal grain size of the zinc foil according to the present invention is small, due to the zinc crystal grain size being small, flexibility increases, as a result of which, it is possible to obtain a zinc foil that is thin but the occurrence of cracks and wrinkles is suppressed.

Next, a preferable method for producing the zinc foil according to the present invention will be described. The zinc foil according to the present invention is preferably produced using an electrolysis method. In the electrolysis method, an anode and a cathode are immersed in an electrolyte solution that contains a zinc source to deposit a zinc foil on the cathode. As the electrolyte solution that contains a zinc source, an aqueous zinc sulfate solution, an aqueous zinc nitrate solution, an aqueous zinc chloride solution, or the like may be used. The zinc concentration in the electrolyte solution is preferably 30 g/L or more and 100 g/L or less from the viewpoint of easily obtaining a zinc foil with small crystal grains. As the anode that is used in electrolysis, a known dimensionally stable electrode (DSE) is preferably used. As the DSE, for example, a titanium electrode coated with iridium oxide, a titanium electrode coated with ruthenium oxide, or the like is preferably used. On the other hand, as the cathode, there is no particular limitation of the type of material of the cathode, and a material that does not affect a reduction of zinc is selected as appropriate. For example, aluminum can be used.

The electrolyte solution may contain, in addition to a zinc source, a source of the metal element described above where necessary. The concentration of the source of the metal element in the electrolyte solution is set such that the proportion of the mass of the metal element relative to the total mass of zinc and the metal element in the electrolyte solution is preferably 10 ppm or more and 10000 ppm or less, more preferably 15 ppm or more and 8000 ppm or less, more preferably 20 ppm or more and 7000 ppm or less, even more preferably 30 ppm or more and 6500 ppm or less, yet even more preferably 30 ppm or more and 6000 ppm or less, and yet even more preferably 400 ppm or more and 6000 ppm or less.

The electrolyte solution may further contain an additional compound. As the additional compound, for example, sulfuric acid may be added for the purpose of adjusting the pH of the electrolyte solution.

It has been found, as a result of studies conducted by the inventors of the present application, that, from the viewpoint of effectively obtaining a zinc foil with the intended apparent density, it is advantageous to circulate the electrolyte solution during electrolysis. In order to circulate the electrolyte solution, for example, an electrolysis apparatus that includes a closed flow path, an electrolytic bath provided in the flow path, and a pump provided in the flow path may be used, and the electrolyte solution may be unidirectionally circulated in the electrolytic bath by driving the pump. The anode and the cathode that are used in electrolysis may be immersed in the electrolytic bath, with the anode and the cathode being disposed in an opposing manner. The anode and the cathode are preferably disposed in the electrolytic bath such that the opposing surfaces of the anode and the cathode (the electrodeposition surface in the case of the cathode) are parallel to the direction in which the electrolyte solution is circulated.

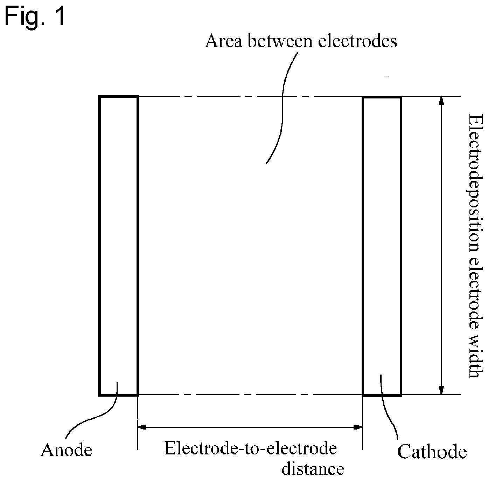

When electrolysis is performed while circulating the electrolyte solution, it is advantageous to adjust the flow rate of the electrolyte solution, or in other words, the circulation rate of the electrolyte solution, from the viewpoint of effectively obtaining a zinc foil with the intended apparent density. Specifically, the circulation rate of the electrolyte solution is set to preferably 0.001 L / (min $\cdot$ mm$^2$) or more and 1 L / (min $\cdot$ mm$^2$) or less, more preferably 0.002 L / (min $\cdot$ mm$^2$) or more and 0.6 L / (min $\cdot$ mm$^2$) or less, even more preferably 0.003 L / (min $\cdot$ mm$^2$) or more and 0.4 L / (min $\cdot$ mm$^2$) or less, and yet even more preferably 0.005 L / (min $\cdot$ mm$^2$) or more and 0.04 L / (min $\cdot$ mm$^2$) or less. The circulation rate is calculated by dividing the flow rate of the electrolyte solution (L/min) by an area between electrodes (mm$^2$). As shown in Fig. 1, the area between electrodes is represented by a product of an electrode-to-electrode distance (mm) and an electrodeposition electrode width (mm). In Fig. 1, the electrolyte solution is preferably circulated in a direction orthogonal to the paper plane. Also, in Fig. 1, the electrodes are provided to extend along a direction orthogonal to the paper plane.

The current density during electrolysis is one of the factors that affect the size of zinc crystal grains in the obtained zinc foil and the apparent density of the zinc foil. Specifically, by setting the current density to a value larger than that used in an ordinary zinc electrolysis condition, a large number of fine crystals can be generated, as a result of which, a zinc foil with small crystal grains can be easily obtained. From this viewpoint, the current density is set to preferably 1000 A/m$^2$ or more and 10000 A/m$^2$ or less, more preferably 1000 A/m$^2$ or more and 6000 A/m$^2$ or less, and even more preferably 1000 A/m$^2$ or more and 4000 A/m$^2$ or less. In contrast, in a conventional method for producing an electrolytic zinc foil, the current density is set to a value as low as about 500 A/m$^2$.

The electrolyte solution can be subjected to electrolysis in a non-heated state or a heated state. In the case where electrolysis is performed with the electrolyte solution being heated, the temperature of the electrolyte solution is set to preferably 10°C or more and 90°C or less. The temperature of the electrolyte solution is set to more preferably 20°C or more and 90°C or less, even more preferably 30°C or more and 80°C or less, and yet even more preferably 30°C or more and 70°C or less. Electrolysis is performed until the thickness of the zinc foil reaches the intended value.

Electrolysis is performed in the above-described condition to reduce and deposit zinc on the cathode immersed in the electrolyte solution and obtain the intended zinc foil. The zinc foil thus obtained is preferably used as a negative electrode active material for a primary battery or a secondary battery. The primary battery may be, for example, a manganese battery. The secondary battery may be, for example, a nickel-zinc battery, an air-zinc battery, or a manganese-zinc battery. In particular, a zinc battery according to the present invention is preferably used as a negative electrode active material for a primary battery.

**Examples**

Hereinafter, the present invention will be described in further detail based on examples. However, the scope of the present invention is not limited to the examples given below. Unless otherwise stated, the percent sign "%" used herein means "mass%".

Example 1

(1) Preparation of Electrolyte Solution

Zinc oxide was used as a zinc compound. Zinc oxide was dissolved in water together with sulfuric acid to prepare an electrolyte solution. The zinc concentration in the electrolyte solution was set to 50 g/L. The sulfuric acid concentration was set to 200 g/L, as a value obtained by converting the total amount of sulphate ions as H$_2$SO$_4$.

(2) Reduction and Deposition of Zinc

As the anode, a DSE composed of a titanium electrode coated with iridium oxide was used. As the cathode, an aluminum plate was used. The anode and the cathode were disposed as shown in Fig. 1, and electric current was applied between the anode and the cathode, with the electrolyte solution being heated at 35°C. The current density was set to 2000 A/m$^2$. The electrolyte solution was circulated at a circulation rate set to 0.029 L / (min • mm$^2$). Electrolysis was performed under this condition, and a zinc foil with a thickness of 50 μm was obtained.

Example 2

A zinc foil was obtained in the same manner as in Example 1, except that the following changes were made. Bismuth nitrate was added to the electrolyte solution used in Example 1. The bismuth concentration was adjusted such that the content of bismuth in the intended zinc foil was the value shown in Table 1. The current density was set to 3000 A/m$^2$. The circulation rate of the electrolyte solution was set to 0.033 L / (min • mm$^2$).

Example 3

A zinc foil was obtained in the same manner as in Example 1, except that the following changes were made. Indium nitrate was added to the electrolyte solution used in Example 1. The indium concentration was adjusted such that the content of indium in the intended zinc foil was the value shown in Table 1. The current density was set to 3000 A/m$^2$. The circulation rate of the electrolyte solution was set to 0.033 L / (min • mm$^2$).

Example 4

A zinc foil was obtained in the same manner as in Example 1, except that the following changes were made. Metallic tin was added to the electrolyte solution used in Example 1. The tin concentration was adjusted such that the content of tin in the intended zinc foil was the value shown in Table 1. The current density was set to 3000 A/m$^2$. The circulation rate of the electrolyte solution was set to 0.033 L / (min • mm$^2$).

Examples 5 and 6

Zinc foils were obtained in the same manner as in Example 1, except that the following changes were made. Silver nitrate was added to the electrolyte solution used in Example 1. In each example, the silver concentration was adjusted such that the content of silver in the intended zinc foil was the value shown in Table 1. The current density was set to 3000 A/m$^2$. The circulation rate of the electrolyte solution was set to 0.033 L / (min • mm$^2$).

Example 7

A zinc foil was obtained in the same manner as in Example 1, except that the following changes were made. Bismuth nitrate was added to the electrolyte solution used in Example 1. The bismuth concentration was adjusted such that the content of bismuth in the intended zinc foil was the value shown in Table 1. The current density was set to 2000 A/m$^2$. The electrolyte solution was not circulated.

Example 8

A zinc foil was obtained in the same manner as in Example 1, except that the following changes were made. Bismuth nitrate was added to the electrolyte solution used in Example 1. The bismuth concentration was adjusted such that the content of bismuth in the intended zinc foil was the value shown in Table 1. The current density was set to 2000 A/m$^2$. The circulation rate of the electrolyte solution was set to 0.008 L / (min • mm$^2$).

Examples 9 to 11

Zinc foils were obtained in the same manner as in Example 1, except that the following changes were made. Bismuth nitrate was added to the electrolyte solution used in Example 1. In each example, the bismuth concentration was adjusted such that the content of bismuth in the intended zinc foil was the value shown in Table 1. The current density was set to 2000 A/m$^2$. The circulation rate of the electrolyte solution was set to 0.0029 L / (min • mm$^2$).

Example 12

A zinc foil was obtained in the same manner as in Example 1, except that the following changes were made. Bismuth nitrate was added to the electrolyte solution used in Example 1. The bismuth concentration was adjusted such that the content of bismuth in the intended zinc foil was the value shown in Table 3. The current density was set to 2000 $A/m^2$. The circulation rate of the electrolyte solution was set to 0.0029 L / (min • $mm^2$). The thickness was adjusted such that the thickness of the intended foil was 20 $\mu$m.

Example 13

A zinc foil was obtained in the same manner as in Example 1, except that the following changes were made. Bismuth nitrate was added to the electrolyte solution used in Example 1. The bismuth concentration was adjusted such that the content of bismuth in the intended zinc foil was the value shown in Table 3. The current density was set to 2000 $A/m^2$. The circulation rate of the electrolyte solution was set to 0.0029 L / (min • $mm^2$). The thickness was adjusted such that the thickness of the intended foil was 200 $\mu$m.

Comparative Example 1

This comparative example is an example in which a zinc foil was produced through casting and rolling. Pure zinc with a purity of 99.99% was molten at 500°C, and bismuth was added to the molten zinc. The amount of bismuth added was adjusted such that the content of bismuth in the intended zinc foil was the value shown in Table 1. The molten zinc was poured into a graphite casting mold (casting shape: 10 mm × 100 mm × 1 mm in thickness), and a casting was obtained. After that, the casting was rolled using a 3-ton roll press machine to obtain a zinc foil with a thickness of 50 $\mu$m.

**Evaluation**

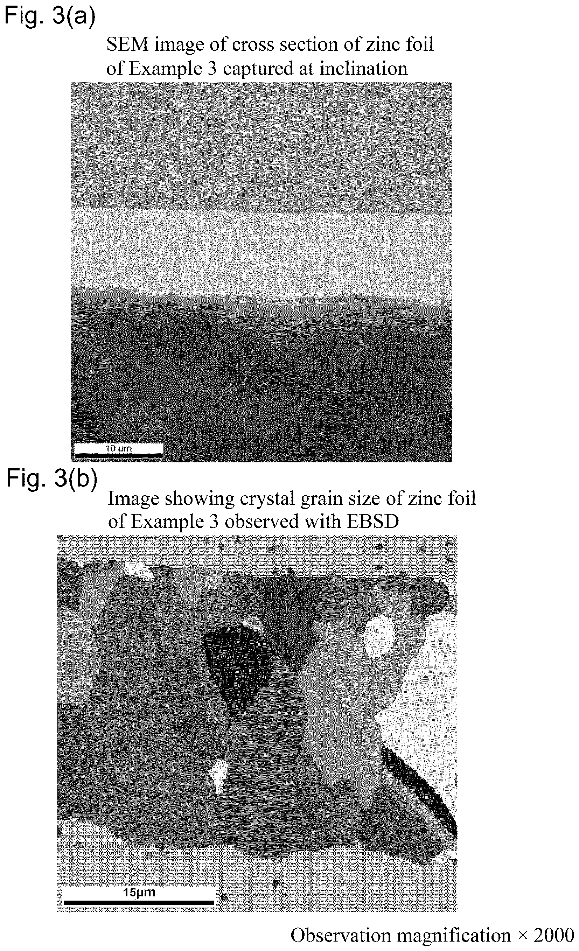

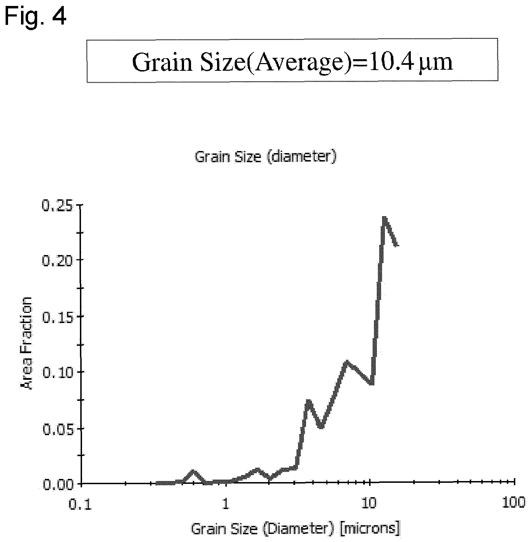

For each of the zinc foils obtained in Examples and Comparative Examples, apparent density, the content of each metal element, and zinc crystal grain size were measured using the methods described above. Also, the amount of gas generated from the zinc foil was measured using a method described below. The results are shown in Tables 1 to 3. Also, a scanning electron microscopy image (inclined at 70°) of the zinc foil obtained in Example 3 taken along a cross section of the zinc foil in the thickness direction and an image of zinc crystal grains observed with EBSD are shown in Fig. 3(a) and Fig. 3(b), respectively. Furthermore, a graph showing a result obtained by analyzing the size of zinc crystal grains in the zinc foil obtained in Example 3 using analysis software is shown in Fig. 4. From Fig. 3(a), it can be seen that the thickness of the zinc foil is about ten and several micrometers. Fig. 3(a) is an image captured when the cross section of the zinc foil was inclined at 70°, and thus the actual thickness was about 50 $\mu$m.

**Amount of Gas Generation**

As the electrolyte solution, a 20% aqueous ammonium chloride solution was used. Each zinc foil was immersed in the electrolyte solution, and left still at 60°C for one week. The amount of hydrogen gas generated during the period was measured using a glass cell. The result of measurement was converted to the amount of gas generation per unit area and per day.

[Table 1]

| | | Electrolysis condition | | Amounts of metal elements in zinc foil | | | | | | Zn crystal grain size ($\mu$m) | Amount of gas generation ($\mu$L/cm$^2$/day) |
|---|---|---|---|---|---|---|---|---|---|---|---|
| | | Electrolyte solution circulation rate L / (min • mm$^2$) | Current density (A/m$^2$) | Bi (ppm) | In (ppm) | Sn (ppm) | Ag (ppm) | Al (%) | Pb (ppm) | | |
| Example | 1 | 0.029 | 2000 | - | - | - | - | 0.02 | 40 | 24.5 | 176 |
| | 2 | 0.033 | 3000 | 60 | - | - | - | 0.02 | 30 | 8.2 | 108 |
| | 3 | 0.033 | 3000 | - | 30 | - | - | 0.02 | 30 | 10.4 | 341 |
| | 4 | 0.033 | 3000 | - | - | 60 | - | 0.02 | 30 | 10.7 | 188 |
| | 5 | 0.033 | 3000 | - | - | - | 100 | 0.02 | 30 | 20.9 | 174 |
| | 6 | 0.033 | 3000 | - | - | - | 360 | 0.02 | 30 | 11.4 | 187 |
| Comp. Ex. | 1 | Rolling | | 5000 | - | - | - | < 0.01 | 20 | 170.5 | 763 |

[Table 2]

| | | Electrolysis condition | | Amounts of metal elements in zinc foil | | | | | | Zn crystal grain size ($\mu$m) | Apparent density of zinc foil (g/cm$^3$) | Amount of gas generation ($\mu$L/cm$^2$/day) |
|---|---|---|---|---|---|---|---|---|---|---|---|---|
| | | Electrolyte solution circulation rate L / (min • mm$^2$) | Current density (A/m$^2$) | Bi (ppm ) | In (ppm ) | Sn (ppm ) | Ag (ppm ) | Al (%) | Pb (ppm ) | | | |
| Example | 7 | Not circulated | 2000 | 550 | - | - | - | 0.02 | 30 | 6.7 | 4.5 | 13 |
| | 8 | 0.008 | 2000 | 550 | - | - | - | 0.02 | 30 | 6.4 | 5.8 | 8 |
| | 9 | 0.029 | 2000 | 750 | - | - | - | 0.02 | 30 | 6.6 | 6.4 | 6 |
| | 10 | 0.029 | 2000 | 1340 | - | - | - | 0.01 | 30 | 3.7 | 6.3 | 10 |
| | 11 | 0.029 | 2000 | 5500 | - | - | - | 0.01 | 20 | 1.6 | 4.5 | 15 |
| Comp. Ex. | 1 | Rolling | | 5000 | - | - | - | < 0.01 | 20 | 170.5 | 7.1 | 763 |

EP 4 130 313 A1

[Table 3]

| | | Electrolysis condition | | Amounts of metal elements in zinc foil | | | | | | Zn crystal grain size (μm) | Thickness of zinc foil (μm) | Apparent density of zinc foil (g/cm³) | Amount of gas generation (μL/cm²/day) |
|---|---|---|---|---|---|---|---|---|---|---|---|---|---|
| | | Electrolyte solution circulation rate L /(min·mm²) | Current density (A/m²) | Bi (ppm) | In (ppm) | Sn (ppm) | Ag (ppm) | Al (%) | Pb (ppm) | | | | |
| Example | 9 | 0.029 | 2000 | 750 | - | - | - | 0.02 | 30 | 6.6 | 50 | 6.4 | 6 |
| | 12 | 0.029 | 2000 | 790 | - | - | - | 0.02 | 30 | 3.8 | 20 | 6.3 | 6 |
| | 13 | 0.029 | 2000 | 640 | - | - | - | 0.02 | 30 | 9.1 | 200 | 6.8 | 6 |
| Comp. Ex. | 1 | Rolling | | 5000 | - | - | - | < 0.01 | 20 | 170.5 | 50 | 7.1 | 763 |

As can be clearly seen from the results shown in Tables 1 to 3, the apparent density and the zinc crystal grain size of the zinc foils obtained in Examples were lower than those of the zinc foil obtained in Comparative Example, and, for this reason, the amount of gas generation was suppressed.

**Industrial Applicability**

According to the present invention, it is possible to provide a zinc foil wherein, when used as a negative electrode active material, the amount of gas generated during long term storage of the battery is suppressed as compared with that of a conventional battery.

**Claims**

1. A zinc foil, having a zinc crystal grain size of 0.2 $\mu$m or more and 50 $\mu$m or less.

2. The zinc foil according to claim 1, comprising: a base metal including zinc; and a metal element other than zinc.

3. The zinc foil according to claim 2,
   wherein the metal element includes at least one selected from the group consisting of bismuth, indium, magnesium, calcium, gallium, tin, barium, strontium, silver, and manganese.

4. The zinc foil according to claim 2 or 3,
   wherein a content of the metal element is 10 ppm or more and 10000 ppm or less in terms of mass.

5. The zinc foil according to claim 4,

   wherein the metal element is bismuth, and
   a content of bismuth is 10 ppm or more and 10000 ppm or less in terms of mass.

6. The zinc foil according to any one of claims 2 to 5,
   wherein a content of aluminum is 0.04 mass% or less, and a content of lead is 60 ppm or less in terms of mass.

7. The zinc foil according to any one of claims 1 to 6,
   wherein the zinc foil has an apparent density of 3 g/cm$^3$ or more and 7 g/cm$^3$ or less, the apparent density being based on contour measurement.

8. A negative electrode active material for batteries comprising a zinc foil having a zinc crystal grain size of 0.2 $\mu$m or more and 50 $\mu$m or less.

9. The negative electrode active material for batteries according to claim 8, comprising:

   a base metal including zinc; and
   a metal element other than zinc.

10. The negative electrode active material for batteries according to claim 9, wherein the metal element includes at least one selected from the group consisting of bismuth, indium, magnesium, calcium, gallium, tin, barium, strontium, silver, and manganese.

11. The negative electrode active material for batteries according to claim 9 or 10, wherein a content of the metal element is 10 ppm or more and 10000 ppm or less in terms of mass.

12. The negative electrode active material for batteries according to claim 9,

    wherein the metal element is bismuth, and
    a content of bismuth is 10 ppm or more and 10000 ppm or less in terms of mass.

13. The negative electrode active material for batteries according to any one of claims 8 to 12,
    wherein a content of aluminum is 0.04 mass% or less, and a content of lead is 60 ppm or less in terms of mass.

**14.** The negative electrode active material for batteries according to any one of claims 8 to 13,
wherein the zinc foil has an apparent density of 3 g/cm$^3$ or more and 7 g/cm$^3$ or less, the apparent density being based on contour measurement.

**15.** A zinc foil production method comprising:

reducing and depositing zinc on a cathode that is immersed in an electrolyte
solution that contains a zinc source,
wherein the reduction is performed while circulating the electrolyte solution at a circulation rate of 0.001 L / (min • mm$^2$) or more and 1 L / (min • mm$^2$) or less, and
a current density during the reduction is set to 1000 A/m$^2$ or more and 10000 A/m$^2$ or less.

## Fig. 1

Area between electrodes

Electrodeposition electrode width

Anode

Electrode-to-electrode distance

Cathode

# Fig. 2

Fig. 3(a)

SEM image of cross section of zinc foil
of Example 3 captured at inclination

Fig. 3(b)

Image showing crystal grain size of zinc foil
of Example 3 observed with EBSD

Observation magnification × 2000

Fig. 4

Grain Size(Average)=10.4 μm

Grain Size (diameter)

**INTERNATIONAL SEARCH REPORT**

| International application No. |
| --- |
| PCT/JP2021/002119 |

**A. CLASSIFICATION OF SUBJECT MATTER**
C22C 18/00(2006.01)i; C25D 1/04(2006.01)i; H01M 4/42(2006.01)i
FI: H01M4/42; C22C18/00; C25D1/04

According to International Patent Classification (IPC) or to both national classification and IPC

**B. FIELDS SEARCHED**

Minimum documentation searched (classification system followed by classification symbols)
C22C18/00; C25D1/04; H01M4/42

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2005/045959 A1 (TOSHIBA BATTERY CO., LTD.) 19 | 1–6, 8–13 |
| Y | May 2005 (2005-05-19) paragraphs [0092]–[0101], [0137]–[0138], fig. 2 | 7, 14 |
| Y | JP 7-245103 A (MITSUI MINING & SMELTING CO., LTD.) 19 September 1995 (1995-09-19) paragraphs [0033]–[0036], [0045]–[0046] | 7, 14 |
| X | JP 54-48647 A (UNIV JAGIELLONSKI) 17 April 1979 (1979-04-17) page 3, lower right column, line 17 to page 4, lower right column, line 2 | 15 |
| P, X | WO 2020/071350 A1 (MITSUI MINING & SMELTING CO., LTD.) 09 April 2020 (2020-04-09) claim 8 | 1–5, 8–12 |
| A | WO 2008/096559 A1 (MATSUSHITA ELECTRIC INDUSTRIAL CO., LTD.) 14 August 2008 (2008-08-14) | 1–15 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 March 2021 (25.03.2201) | 06 April 2021 (06.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2021/002119 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-171762 A (MATSUSHITA ELECTRIC INDUSTRIAL CO., LTD.) 24 July 2008 (2008-07-24) | 1-15 |
| A | JP 2001-273893 A (DOWA MINING CO., LTD.) 05 October 2001 (2001-10-05) | 1-15 |
| A | JP 61-224267 A (DURACELL INTERNATIONAL INCORPORATED) 04 October 1986 (1986-10-04) | 1-15 |

Form PCT/ISA/210 (continuation of second sheet) (January 2015)

**EP 4 130 313 A1**

| Patent Documents referred in the Report | Publication Date | Patent Family | Publication Date |
|---|---|---|---|
| WO 2005/045959 A1 | 19 May 2005 | US 2007/0111096 A1 paragraphs [0213]-[0232], [0296], [0298], fig. 2 EP 1691433 A1 CN 1879239 A KR 10-2006-0092271 A | |
| JP 7-245103 A | 19 Sep. 1995 | (Family: none) | |
| JP 54-48647 A | 17 Apr. 1979 | DE 2833614 A1 page 11, line 11 to page 13, bottom line BE 869491 A PL 200070 A FI 782393 A | |
| WO 2020/071350 A1 | 09 Apr. 2020 | (Family: none) | |
| WO 2008/096559 A1 | 14 Aug. 2008 | CN 101542791 A | |
| JP 2008-171762 A | 24 Jul. 2008 | US 2008/0170962 A1 CN 101226997 A | |
| JP 2001-273893 A | 05 Oct. 2001 | (Family: none) | |
| JP 61-224267 A | 04 Oct. 1986 | US 4777100 A GB 2170946 A GB 2200791 A DE 3603342 A FR 2577351 A BE 904216 A CH 671304 A | |

**INTERNATIONAL SEARCH REPORT**
Information on patent family members

International application No.

PCT/JP2021/002119

Form PCT/ISA/210 (patent family annex) (January 2015)

20

**EP 4 130 313 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000058045 A
- US 2008029189 A1